# EUROPEAN PATENT SPECIFICATION

(11) **EP 3 720 681 B1**
(45) Date of publication and mention of the grant of the patent: **02.10.2024**
(21) Application number: 18842588.8
(22) Date of filing: 07.12.2018
(51) Int. Cl.: B29C 48/485, B29C 48/885, B29C 48/88, B29C 48/94, B29K 77/00

(54) **METHOD OF FABRICATION FOR POLYCAPROLACTAM RODS**
VERFAHREN ZUR HERSTELLUNG VON POLYCAPROLACTAMSTÄBEN
PROCÉDÉ DE FABRICATION DE TIGES DE POLYCAPROLACTAME

(30) Priority: 07.12.2017 PL 42377317
(43) Date of publication of application: 14.10.2020
(73) Proprietor: Instytut Wysokich Cisnien Polskiej Akademii Nauk, 01-142 Warszawa (PL)
(72) Inventor: WRÓBLEWSKA, Monika, 01-909 Warszawa (PL); PACHLA, Waclaw, 01-873 Warszawa (PL)
(74) Representative: AOMB Polska Sp. z.o.o.
(86) International application number: PCT/PL2018/050065
(87) International publication number: WO 2019/112455

(56) References cited:
- WO-A1-2014/011067
- WO-A1-2017/027699
- CA-A- 905 582
- JP-A- S 526 762
- JP-A- S5 340 063
- TOSHIO NAKAYAMA ET AL: "MECHANICAL TESTING AND STRUCTURAL CHARACTERIZATION OF HYDROSTATICALLY EXTRUDED POLYMERS. I. EFFECTS OF HYDROSTATIC EXTRUSION ON SUBSEQUENT MECHANICAL BEHAVIOR", BULLETIN OF THE JSME, vol. 20, no. 144, 1 June 1977 (1977-06-01), pages 688 - 695, XP055805087, Retrieved from the Internet <URL:https://www.jstage.jst.go.jp/article/jsme1958/20/144/20_144_688/_pdf/-char/en>

## Description

The subject of the invention is a production process, using unfilled polycaprolactam, of high strength rods, i.e. rods characterized by tensile strength greater than 450 MPa, tensile yield-stress greater than 400 MPa, and bending module above 2700 MPa, as well as a rod made of such a plastic. In the present description the term *unfilled polycaprolactam* is understood as a polymer not blended with reinforcing additives.

Metalworking under the name hydrostatic extrusion has been known for over a hundred years. It is based on placing a billet (material for extrusion) in a working chamber filled with a pressure medium. The working chamber is closed on one side with a piston and on the other side with an extrusion die which has a shape of the desired extruded product. The piston penetrating into the working chamber, compresses the pressure medium causing an increase of the hydrostatic pressure in the chamber. After reaching the critical pressure characteristic for a given billet material, the billet begins to extrude through the die to form of extruded product. One of the important parameters of the hydrostatic extrusion process is the so-called reduction R, defining the degree of reduction of the cross-section of the billet, calculated as the ratio of the cross-sectional area of the billet before extrusion to the product cross-section after extrusion. Hydrostatic extrusion after some time has started to be used also for plastics.

Polycaprolactam is available on the market, among others, under the trade names Polyamide 6 (PA6) and Nylon 6 (Ny6). The publication by N.Inoue, T.Nakayama, M. Shimono, "Deformation of Polymers During Hydrostatic Extrusion" [Journal of Pressure Vessel Technology, Transactions of the ASME, Vol. 100 (1978) pp. 400-405] discloses hydrostatic extrusion of Nylon 6, conducted with reduction R in the range from 1.43 to 10, however the authors focused on the study of distortion grids and influence of extrusion pressures on the polymer structure, and no information is given on the mechanical properties of the hydrostatically extruded Nylon 6.

The publication by T. Ariyam, T. Nakayama, N. Inoue entitled "Thermal Properties of Hydrostatically extruded Amorphous Polymers" [Polymer Letters Edition 1977, Vol. 15, pp. 427-433] discloses the use of hydrostatic extrusion of amorphous polymethyl methacrylate polymers PMMA and high-impact polystyrene HIPS at room temperature, but no tensile and bending properties are provided.

In the publication of N. Inoue, T. Nakayama and M. Shimono "Effects of temperature and strain on the deformation of polymers during hydrostatic extrusion" [HighPressure Science and Technology (1979) pp. 1773-1778], the authors present the effects of hydrostatic extrusion of high density polyethylene HDPE, polypropylene PP, polyvinyl chloride PVC and acrylonitrile-butadiene-styrene copolymer ABS with various deformations up to 90% at room temperature, and characterize the properties of extruded rods. However, the highest strength for polypropylene PP described was 50 MPa.

In publication N. Inoue, T. Nakayama and T. Ariyama, "Hydrostatic Extrusion of Amorphous Polymers and Properties of Extrudates" [J. Macromol. Sci.-Phys., B19 (3) (1981) pp. 543-563], the authors present the results of hydrostatic extrusion examinations of amorphous polymethyl polymethacrylate PMMA, high impact polystyrene HIPS, polycarbonate PC, polyvinyl chloride PVC and acrylonitrile butadiene copolymer ABS with reductions up to R = 3 at temperatures up to 100°C. The strength of the amorphous polymers undergoing described processing, such as PMMA, did not exceed 150 MPa, and the elongation after extrusion with a reduction of R = 2.5 reached 45%. Extensive data on hydrostatic extrusion parameters and properties of polymers after deformation processes such as: polyethylene PE, polypropylene PP, nylon 6, acrylonitrile butadiene styrene copolymer ABS, polymethyl methacrylate PMMA, polyvinyl chloride PVC, polycarbonate PC and Nylon 6 were collected in the chapter entitled "Polymers" of the book *"Hydrostatic Extrusion Theory and Applications",* [N. Inoue, M. Nishihara, Elsevier Applied Science Publishers (1985) London and New York, pp. 333-362]. The data disclosed in this book determined the maximum tensile strength of high density polyethylene as 400 MPa, achieved at reduction up to R = 30. In the paper by N. Huggo Ladizesky, Ian M. Ward and W. Bonfield, "Hydrostatic Extrusion of Polyethylene Filled with Hydroxyapatite", [Polymers for Advanced Technologies 1997, Vol. 8, pp. 496-504], the authors focused on hydrostatic extyrusion with reduction up to R = 11 at room temperature of polycrystalline polyethylene rods, made by mixing of polyethylene and hydroxyapatite powders and pressing on a screw press at temperatures between 210°C and 250°C. For pure polyethylene the bending modulus achieved a maximum of 2500 MPa, and the bending strength reached 52 MPa after extrusion with reduction R = 4, while for polyethylene filled with hydroxyapatite in 30% of its volume the equivalent properties were respectively 5200 MPa and 63 MPa, which clearly indicates the strengthening nature of the filling additives used.

The publication by G.V.Kozlov, V.A.Beloshenko, V.Z.Aloev and V.N.Varyukhin, "Microhardness of Extruded Polyethylene and Composites Based on it" [Materials Science 2000, Vol. 36, pp. 431-436] discloses conventional (non-hydrostatic) extrusion of billets made of PE powder at temperatures above 120°C and microhardness resulting from this process, in which the effect of anisotropy on hardness properties has been found.

The paper by F.Jin, S.Moon, S.Tsutsumi, S.Hyon entitled "Hydrostatic Extrusion of Poly(L-Lactide)" [Macromol. Symp. 2005, Vol. 224, pp. 93-104] describes the biodegradable Poli(L-lactide) PLLA polymer after hydrostatic extrusion at 145°C and with reductions up to R = 12, used in order to improve its mechanical properties. The maximum bending strength measured by the authors was 350 MPa and the bending module - 7500 MPa, which can be attributed to the strong orientation of the crystalline PLLA fibres induced by the hydrostatic extrusion process. Patent publication US3642976A discloses a method of hydrostatic extrusion at elevated temperatures of polymers such as polypropylene PP, polyacetal POM and Nylon 66. These polymers before the hydrostatic extrusion process were filled with oriented fibrous or plate fillers and then subjected to hydrostatic extrusion at a temperature in the range from 100°C to 180°C. Hydrostatic extrusion resulted in a significant increase of the materials strength parameters with respect to polymers not subjected to such a process, both unfilled and filled. Further processes for producing polycaprolactam rods are disclosed in JP S52 6762 A and JP S53 40063 A.

None of the publications cited above contain instructions on how to obtain high strength rods from unfilled polycaprolactam. For a specialist in a field of hydrostatic extrusion the information about the other plastics, e.g. polyethylene, described above, is not sufficient enough for obtaining high strength products from unfilled polycaprolactam.

The aim of the present invention was to obtain a technology for producing rods from unfilled polycaprolactam with strength parameters at least equivalent to those made of filled polycaprolactam, i.e. a polycaprolactam blended with reinforcing additives, namely having tensile strength greater than 450 MPa, tensile yield-stress than 400 MPa and bending module greater than 2700 MPa.

This aim is achieved by a method consisting of a single hydrostatic extrusion of a billet made of unfilled polycaprolactam and coated with a lubricating agent based on silicone oil. The hydrostatic extrusion of such a billet is carried out at room temperature and at a constant linear speed ranging from 3 to 120 mm/s. The reduction in the cross-sectional area of the billet during hydrostatic extrusion is from 3.5 to 5.5, and the rod produced is cooled with cold water on an ongoing basis.

In one of variants of the method according to the invention the reduction in the cross-sectional area of the billet during the hydrostatic extrusion is from 4 to 5.

In another variant of the method according to the invention the pressure of the liquid pressure transmitting medium acting on the billet is not less than 230 MPa.

A rod according to the invention is characterized by a tensile strength greater than 450 MPa, a tensile yield-stress greater than 400 MPa, and a bending module greater than 2700 MPa, and also by that it has been produced by the method described above.

The invention makes it possible to dramatically simplify the production of polycaprolactam, e.g. from Polyamide 6, of products with unexpectedly high and previously unheard-of strength parameters. Elimination of the preparing stage of the polymer mixture with reinforcing additives and the conducting process of the extrusion run at room temperature speeds up the production process, which gives measurable economic effects. The homogeneity of the material increases the resistance of the finished product to the impact of the aggressive environment.

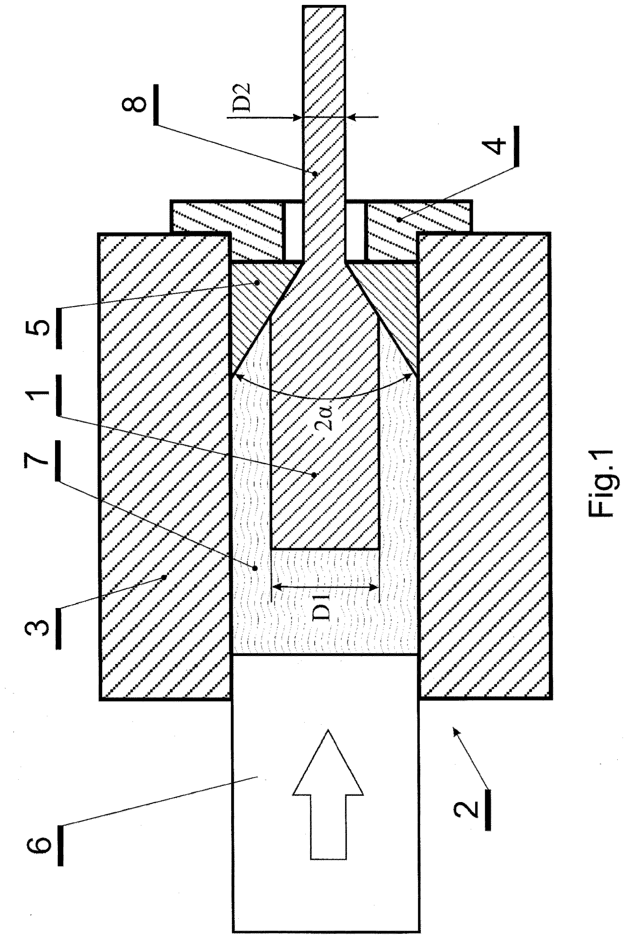

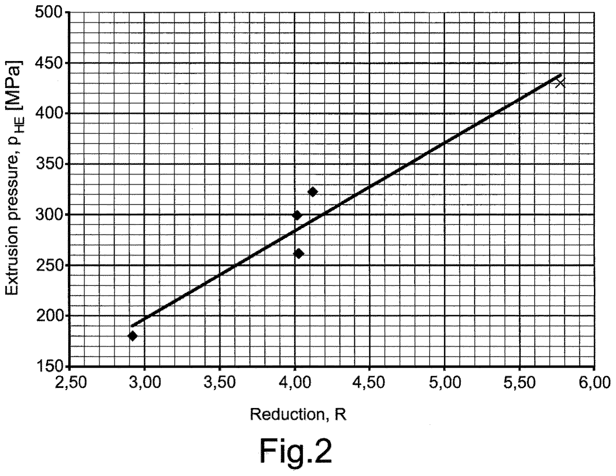

The invention is schematically illustrated in the accompanying figures of drawings, wherein Fig.1 shows a hydrostatic extrusion scheme while Fig.2 shows the dependence of the extrusion pressure as a function of increasing reduction in hydrostatic extrusion of an unfilled polycaprolactam.

The invention will be described in more detail in the following two embodiments:

### Example 1

In order to make an exemplary rod according to the invention, was used an unfilled polycaprolactam with the trade name Polyamide 6, characterized by a tensile strength Rₘ of 85 MPa and a bending modulus of 1240 MPa. The billet 1 was made of this material in a form of a cylinder with a diameter D1 equal to 15.57 mm and a length of 226 mm, ended on one side with a cone with an apex angle 2α of 45°. Billet 1 has been subjected to a hydrostatic extrusion process in a pressing device 2, having a working chamber 3 closed on one side with a plug 4 against which an extrusion die 5 rests and on the other side with a piston 6. The extrusion die 5 has an input cone with an apex angle 2α of 45°, i.e. the angle corresponding to the billet cone 1. The initial diameter of the extrusion die 5 was 7.12 mm. After covering the billet 1 with a solid grease with the trade name High Vacuum Grease, containing silicone oil and inorganic thickener, it was placed in the working chamber 3 of the pressing device at room temperature, the conical end of the billet 1 being placed in the cone of the die 5. The working chamber 3 at room temperature was then filled with a known liquid pressure medium 7 at room temperature and then closed with a piston 6. The pressure increase in the chamber 3 occurred as a result of the uniform movement of the piston 6 in the direction of the arrow. After reaching a critical pressure of 296 MPa in chamber 3, was initiated the extrusion process with reduction R of 4.03, conducted at a room temperature and with speed of 4.02 mm/s. The rod 8 exiting the die 5 was cooled with cold running water. A single operation of the above-described extrusion and cooling resulted in a rod 8 with a nominal diameter D2 of 7.76. It had a tensile strength Rₘ of 508 MPa, a tensile yield-stress R_{0,2} of 507 MPa, an elongation of 412%, a bending module of 2720 MPa, and a bending strength of 64.8 MPa.

### Example 2

From the Polyamide 6 described in the first example, a billet 1 was made in the form of a cylinder with a diameter D1 equal to 15.57 mm and a length of 225 mm, with a cone characterized by an apex angle 2α of 45° at one end. The billet 1 was covered with the same grease as in the first example and subjected to hydrostatic extrusion in the same as previously device 2, at the same temperature as the previous one and at a critical pressure of 321 MPa. In this example, the billet 1 was subjected to extrusion with the reduction R of 4.02 and with a linear speed of 70.23 mm/s. As before, the rod 8 exiting the die 5 was cooled with cold running water. As a result of the operation of the extrusion and cooling described above, the rod 8 with a nominal diameter D2 of 7.77 mm, having a tensile strength Rₘ of 480 MPa, a tensile yield-stress R_{0,2} of 479 MPa, an elongation of 387%, a bending module of 3230 MPa and bending strength of 64.7 MPa, was obtained.

The dependence of the hydrostatic extrusion pressure of the Polyamide 6 described above as a function of the reduction R is shown in Fig.2. As can be seen from this graph, the hydrostatic extrusion pressure increases linearly with the increase of plastic deformation, i.e. with the reduction R. During the hydrostatic extrusion process mechanical work of plastic deformation is converted into heat, which means that increase of the reduction R is accompanied by a linear increase of temperature of the extruded rods that may reach even the melting temperature of Polyamide 6, i.e. 220°C. Such extrusion temperature results in melting of the surface of the formed rod and formation of spiral cracks strongly reducing its strength. This occurs at a reduction R of more than 5.5 and in the graph of Fig.2 it is indicated by the sign "X".

## Claims

1. A method for producing polycaprolactam rods having a tensile strength greater than 450 MPa, a tensile yield-stress greater than 400 MPa and a bending module greater than 2700 MPa, by a single hydrostatic extrusion of a billet (1) containing polycaprolactam, **wherein** the billet (1) made of unfilled polycaprolactam is subjected to the hydrostatic extrusion in a pressing device (2) having a working chamber (3) closed on one side with a plug (4) against which an extrusion die (5) rests and on the other side with a piston (6), wherein the billet (1) is covered with an oil based lubricant before putting the billet (12) into the working chamber (3) and the hydrostatic extrusion of the billet (1) is carried out at room temperature with a constant linear speed in the range from 3 to 120 mm/s, wherein the degree of reduction (R) of the cross-sectional area of the billet (1) following the hydrostatic extrusion is from 3.5 to 5.5 and the rod (8) produced is continuously cooled with cold water.

2. The method according to claim 1, **wherein** the degree of reduction (R) of the cross-sectional area of the billet (1) following the hydrostatic extrusion is from 4 to 5.

3. The method according to claim 1 or 2, **wherein** the pressure of liquid medium (7) extruding the billet (1) is not less than 230 MPa.

## Patentansprüche

1. Ein Verfahren zur Herstellung von Polycaprolactam-Stäben mit einer Zugfestigkeit von mehr
als 450 MPa, einer Streckgrenze von mehr als 400 MPa und einem Biegemodul
von mehr als 2700 MPa durch ein einziges hydrostatisches Strangpressen einer Puppe (1), der Polycaprolactam enthält, **wobei** die Puppe (1)
aus ungefülltem Polycaprolactam dem
hydrostatischen Strangpressen in einer Anpressvorrichtung (2) unterworfen wird, die eine Arbeitskammer (3) aufweist, die auf einer Seite mit einem Stopfen (4), an dem
eine Pressmatrize (5) anliegt, und auf der anderen Seite mit einem Kolben (6) verschlossen ist, wobei
die Puppe (1) mit einem Schmiermittel auf Ölbasis bedeckt wird, bevor die
Puppe (12) in die Arbeitskammer (3) eingebracht wird, und
das hydrostatische Strangpressen der Puppe (1) bei
Raumtemperatur mit einer konstanten linearen Geschwindigkeit im Bereich von
3 bis 120 mm/s durchgeführt wird, wobei der Grad der
Verringerung (R) der Querschnittsfläche der Puppe (1) nach
dem hydrostatischen Strangpressen von 3,5 bis 5,5 beträgt und der erzeugte Stab (8) kontinuierlich mit kaltem Wasser gekühlt wird.

2. Das Verfahren nach Anspruch 1, **wobei** der Grad der Verringerung (R) der Querschnittsfläche der Puppe (1) nach dem hydrostatischen Strangpressen 4 bis 5 beträgt.

3. Das Verfahren nach Anspruch 1 oder 2, **wobei** der Druck des flüssigen Mediums (7), das die Puppe (1) strangpresst, nicht weniger als 230 MPa beträgt.

## Revendications

1. Un procédé pour produire des tiges de polycaprolactame ayant une résistance à la traction supérieure
à 450 MPa, une limite d'élasticité à la traction supérieure à 400 MPa et un module de flexion
supérieur à 2700 MPa, par une extrusion hydrostatique en une seule fois d'une billette (1) contenant du polycaprolactame, dans lequel la billette (1)
en polycaprolactame non chargé est
soumise à l'extrusion hydrostatique dans un dispositif de pressage (2) comportant une chambre de travail (3) fermée d'un côté par un bouchon (4) sur lequel repose une
filière d'extrusion (5) et de l'autre côté par un piston (6), dans lequel
la billette (1) est recouverte d'un lubrifiant à base d'huile avant de placer
la billette (12) dans la chambre de travail (3) et
l'extrusion hydrostatique de la billette (1) est
effectuée à température ambiante avec une vitesse linéaire constante dans la plage de 3 à 120 mm/s, dans lequel le degré de
réduction (R) de la section transversale de la billette (1) après
l'extrusion hydrostatique est compris entre 3,5 et 5,5 et la tige (8) produite est continuellement refroidie à l'eau froide.

2. Le procédé selon la revendication 1, dans lequel le degré de réduction (R) de la section transversale de la billette (1) après l'extrusion hydrostatique est de 4 à 5.

3. Le procédé selon la revendication 1 ou 2, dans lequel la pression du milieu liquide (7) extrudant la billette (1) n'est pas inférieure à 230 MPa.
